# EUROPEAN PATENT SPECIFICATION

(11) **EP 0 526 765 B1**
(45) Date of publication and mention of the grant of the patent: **05.03.1997**
(21) Application number: 92111819.6
(22) Date of filing: 10.07.1992
(51) Int. Cl.: H04L 12/18, H04L 12/52

(54) **Transmission apparatus having a function for broadcast communication**
Übertragungsvorrichtung mit Rundsendefunktion
Dispositif de transmission ayant une function de communication par diffusion

(30) Priority: 11.07.1991 JP 196108/91
(43) Date of publication of application: 10.02.1993
(73) Proprietor: MITSUBISHI DENKI KABUSHIKI KAISHA, Tokyo 100 (JP)
(72) Inventor: Imai, Shunji, c/o Mitsubishi Denki K. K., 8-chome, Amagasaki-shi, Hyogo (JP)
(74) Representative: Sajda, Wolf E., Dipl.-Phys.

(56) References cited:
- EP-A- 0 255 767
- EP-A- 0 290 769
- IBM TECHNICAL DISCLOSURE BULLETIN. vol. 24, no. 7B, December 1981, NEW YORK US pages 3910 - 3911 T. L. ANDERSON 'GROUP ADDRESSING FOR SDLC'

## Description

The present invention relates to a transmission apparatus such as a time-division multiplexer, which can provide time-division multiplexing and separation of information transmitted from or supplied to interface units used for respective terminals, which are electrically connected to a data bus.

The European application EP-A-0 255 767 discloses a selective broadcasting arrangement for local area networks. Messages can be transmitted to a subset of a plurality of stations, each station having a unique address. The broadcasting arrangement comprises means for generating a mask with a unique address to form an effective address generic to the members of the subset of stations to receive a message from one station. Means are also provided for transmitting the effective generic address together with an associated data message from the one transmitting station to the plurality of substations. Each of the substations comprises means for translating the effective generic address to determine if the data message is intended for it as a member of the subset.

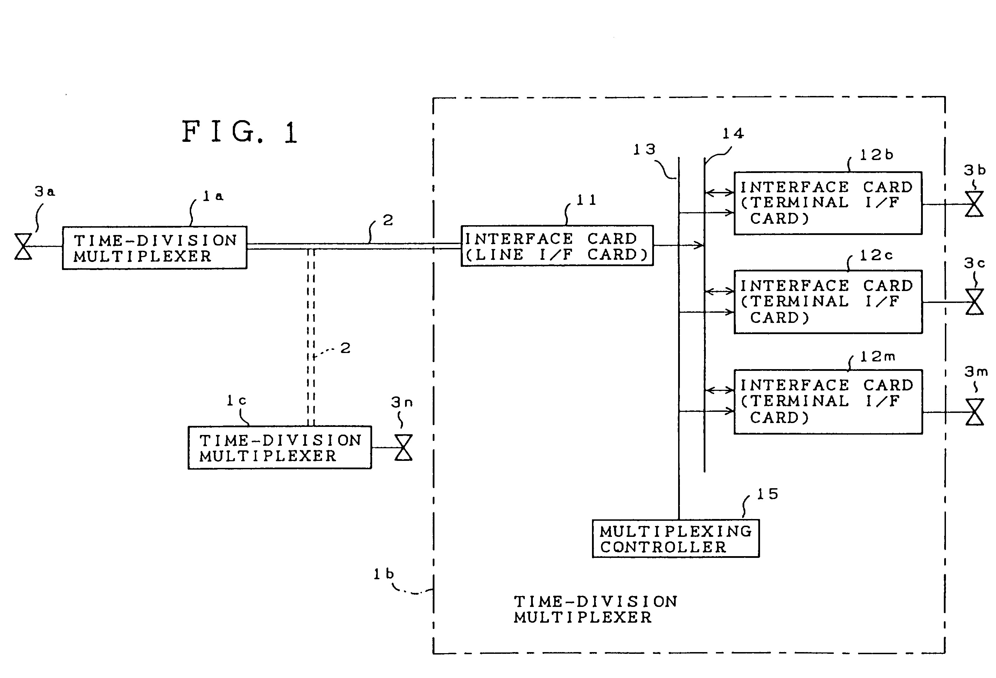

FIG. 1 is a block diagram showing the structure of a system to which a plurality of time-division multiplexers are electrically connected via lines. In FIG. 1, reference numerals la through lc indicate time-division multiplexers, respectively, which are identical in structure to one another. The internal configuration of the time-division multiplexer 1b alone is shown in FIG. 1. Reference numeral 2 indicates each of lines such as a digital leased line, which connect the respective time-division multiplexers 1a through 1c with one another and have branching functions. Reference numerals 3a through 3n indicate terminals respectively, which are connected to any one of the time-division multiplexers 1a through 1c.

In the time-division multiplexer 1b, reference numeral 11 indicates an interface card (hereinafter called a "line 1/F card") to which the line 2 is electrically connected. Reference numerals 12b through 12m indicate interface cards (hereinafter called "terminal 1/F cards") to which terminals 3b through 3m are connected respectively and having unique addresses. Reference numeral 13 indicates an address bus used to transmit address data to each of the terminal 1/F cards 12b through 12m, and reference numeral 14 indicates a data bus used to transfer data between the line 1/F card 11 and each of the terminal 1/F cards 12b through 12m. In addition, reference numeral 15 indicates a multiplexing controller used to output address data for specifying the terminal 1/F cards 12b through 12m which provide the transfer of the data, to the address bus.

The operation of the time-division multiplexer 1b will now be described. Let's now consider a broadcast communication system of a type wherein the same data can be simultaneously transmitted to the terminals 3c and 3n from the terminal 3a. In this case, the branching function of the line 2 is used. That is, data transmitted from the terminal 3a is multiplexed by the time-division multiplexer 1a and sent to the line 2. The data sent to the line 2 is transferred to the time-division multiplexers 1b and 1c by making use of the branching function of the line 2. The time-division multiplexer 1b to which the data has been transferred from the line 2 is activated in the following manner so as to transfer the data to the terminal 3c by separation.

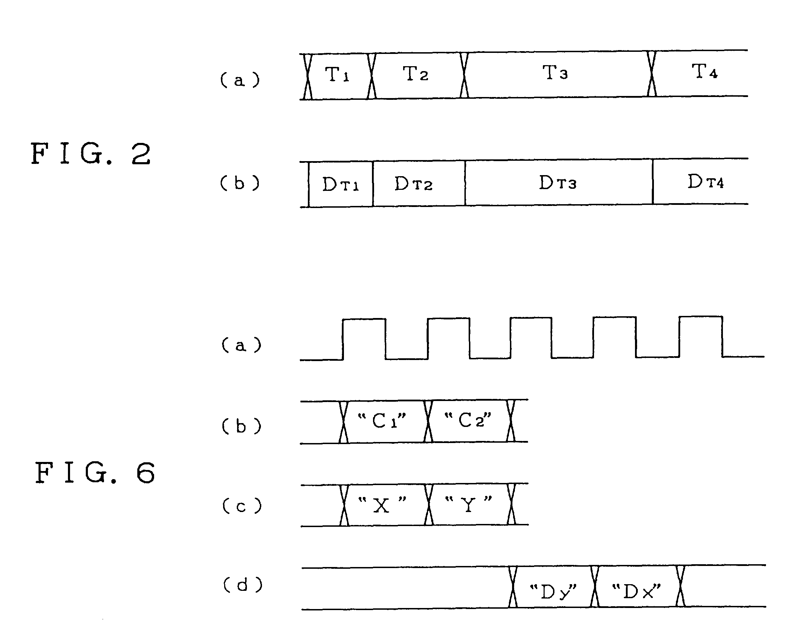

FIG. 2 is a timing chart for describing the timing at which data is transferred to and from each of the address bus 13 and the data bus 14 in the time-division multiplexer 1b. Now, FIG. 2(a) shows an address transmitted to the address bus 13 from the multiplexing controller 15 and FIG. 2(b) shows data transmitted in the data bus 14. As described above, the unique addresses have been assigned to the terminals 3b through 3m respectively. In the time-division multiplexer 1b, the multiplexing controller 15 serves to select the terminal 1/F card 12c from the terminals 1/F cards 12b through 12m based on the address sent to the address bus 13.

The so-selected terminal 1/F card 12c takes in data delivered to the data bus 14 from the line 1/F card 11 and supplies it to the terminal 3c. The time-division multiplexer 1c is also activated in the same manner as described above. That is, data from the terminal 3a is transferred to the terminal 3n. Thus, the simultaneous transmission of the data from the terminal 3a to the terminal 3c, 3n can be achieved.

Incidentally, Japanese Patent Application Laid-Open No. 62-67945, for example, has been disclosed as a reference in which a technique related to the system for providing the conventional broadcast communication has been described.

Since the conventional system is constructed as described above, the broadcast communication can be realized by making use of the branching function of line 2. That is, the same data cannot be transmitted to each of the terminals 3b through 3m which are connected to the identical time-division multiplexer 1b because each of the time-division multiplexers la through lc is not provided with a function for the broadcast communication.

With the foregoing problems in view, it is an object of the present invention to provide a broadcast communication controlling system of a type wherein a plurality of terminals held in an identical time-division multiplexer can receive the same data simultaneously.

According to the present invention, there is provided a transmission apparatus as defined in claim 1.

A control unit is provided for adding broadcast control data to an address transmitted to an address bus. When the broadcast control data is brought to an active condition, the terminals connected to the terminal interface units to each of which the same group address has been assigned, serve to receive data on a data bus. Thus, a plurality of terminals connected to an identical time-division multiplexer can receive data simultaneously.

Also, according to the present invention, there is provided a transmission apparatus as defined in claim 3.

In this case, the addresses of the terminal interface units to which the data are to be input and from which the data are to be output are set as one paired address. In addition, the broadcast control data instructs all the terminal interface units to which the data are to be input during the next cycle time to simultaneously receive the data. Thus, a plurality of terminals connected to an identical time-division multiplexer can provide broadcast communication.

The above and other objects and advantages of the present invention will become apparent from the following description taken in conjunction with the accompanying drawings in which preferred embodiments of the present invention are shown by way of illustrative example.
FIG. 1 is a block diagram showing the structure of a system according to the prior art, which has a function for broadcast communication;
FIG. 2 is a timing chart for describing data input/output timing employed in a conventional broadcast communication controlling method;
FIG. 3 is a timing chart for describing data input/output timing employed in a transmission apparatus according to one embodiment of the present invention;
FIG. 4 is a diagram for describing one example of interface's classification;
FIG. 5 is a diagram for describing one example of interface's classifications employed in a transmission apparatus according to another embodiment of the present invention;
FIG. 6 is a diagram for describing data input/output timing employed in a transmission apparatus according to a further embodiment of the present invention;
FIG. 7 is a timing chart for describing data input/output timing employed in a transmission apparatus according to a still further embodiment of the present invention; and
FIG. 8 is a timing chart for describing data input/output timing employed in a transmission apparatus according to a still further embodiment of the present invention.

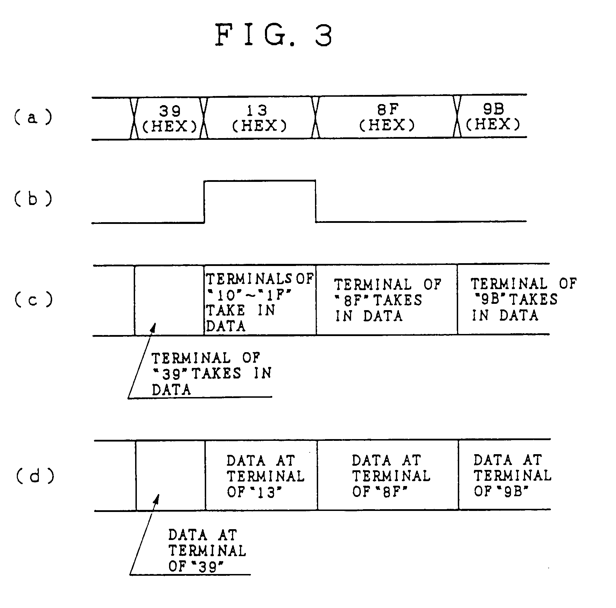

Preferred embodiments of the present invention will hereinafter be described with reference to the accompanying drawings. FIG. 3 is a timing chart for describing the timing at which data are transferred to and from an address bus 13 and a data bus 14 employed in a transmission apparatus according to one embodiment of the present invention. A system to which such a data input/output timing setting method is applied is illustrated in FIG. 1 by way of example. FIG. 3(a) shows address data transmitted to the address bus 13 from a multiplexing controller 15. FIG. 3(b) shows a broadcast control bit equivalent to one bit, which is added to the address data. In addition, FIG. 3(c) represents receive data (i.e., data transmitted along a down channel extending from a line 1/F card 11 to each of terminal 1/F cards 12b through 12m) transmitted through the data bus 14. Furthermore, FIG. 3(d) shows transmit data (i.e., data transmitted along an up channel extending from each of the terminal 1/F cards 12b through 12m to the line 1/F card 11) delivered to the data bus 14.

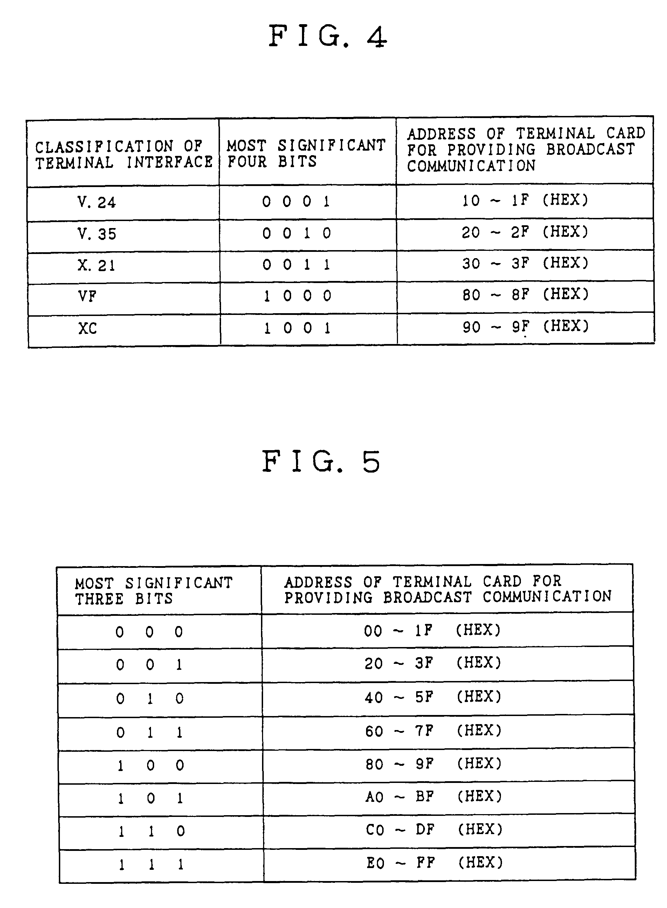

The operation of the present embodiment will now be described below. Each address assigned to each of the terminal 1/F cards 12b through 12m in a unique form is expressed in 8 bits in binary form, for example. The most significant four bits of the each unique address represent the classes of interfaces as illustrated in FIG. 4. In the illustrated example, one of the addresses of 10(H) through 1F(H) is assigned to a V.24 interface card, and the most significant four bits of the address referred to above are expressed in the form of "0001". In addition, one of the addresses of 20(H) through 2F(H) is assigned to a V.35 interface card, and the most significant four bits of the addresses are expressed in the form of "0010". Subsequently, addresses of 30(H) through 3(F) and 80(H) through 8(F) are expressed in the same manner as described above. Finally, one of the addresses of 90(H) through 9F(H) is given to an XC interface card, and the most significant four bits of the addresses are expressed in the form of "1001". That is, upper sides of addresses defined according to the classes of the interfaces represent group addresses.

When the multiplexing controller 15 transmits address data to the address bus 13, the broadcast control bit shown in FIG. 3(b) is added to the address data. When broadcast communication is made, the broadcast control bit is brought to an active condition, i.e., it is rendered high in level, for example. In the illustrated example, the address at the time that the broadcast control bit has been brought to the high level is of "13(H)". When the broadcast control bit is brought to the high level, the least significant four bits, i.e., "0011" of the address "13(H)" are taken no account. That is, terminal 1/F cards to which the addresses "10(H)" through "1F(H)" have been assigned, among terminal 1/F cards 12b through 12m, take in receive data which exist in the data bus 14. Thereafter, those terminal 1/F cards transfer the receive data thus taken in to respectively corresponding terminals connected thereto.

Although the transmission of the data in the reverse direction is required at the same time, only the terminal 1/F card to which the address 13(H) whose all bits coincide with one another in level has been assigned, can output transmit data to the data bus 14. Accordingly, the broadcast communication can be made to terminals whose interfaces are identical in classification to one another and which are selected from a plurality of terminals 3b through 3m held in a time-division multiplexer 1b.

Incidentally, the above-described embodiment is directed to a case in which the classifications of the interfaces are divided according to the most significant four bits of the addresses which have been assigned to the interface cards and expressed in the form of 8 bits. As shown in FIG. 5, the classifications of the interfaces may also be divided according to the most significant three bits. Alternatively, the classifications of the interfaces may be used depending upon the kinds of interface cards which have been put into practical use.

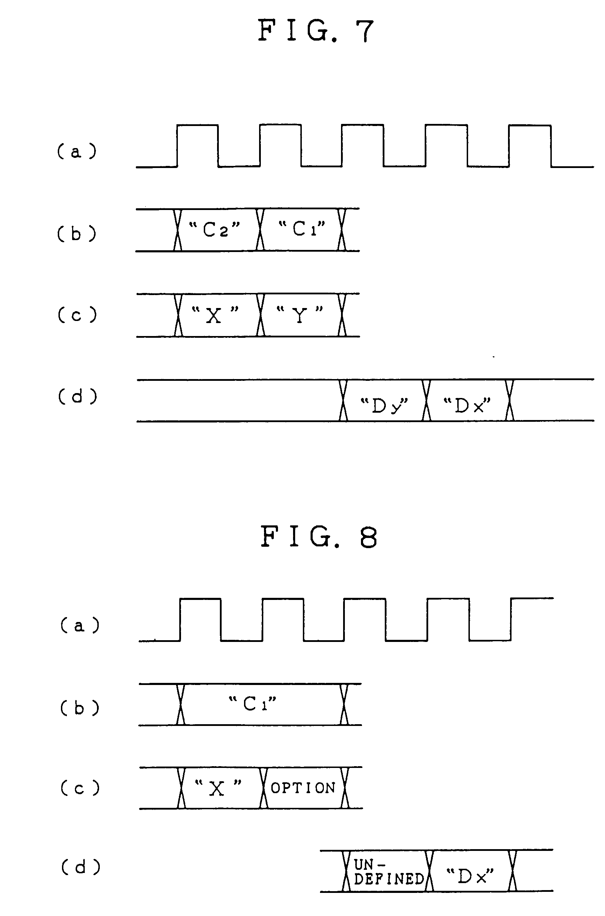

FIG. 6 is a timing chart for describing the timing at which a transmission apparatus according to another embodiment of the present invention transmits data. FIG. 6(a) shows a train of clock pulses. FIG. 6(b) shows a control bit expressed in 1 bit. FIG. 6(c) illustrates a pair of addresses used to specify an address on each of interface cards having unique addresses. In addition, FIG. 6(d) represents a pair of data transmitted from a specified interface card.

The operation of the present embodiment will now be described below. In general, the interface card in which the former half "X" of the addresses in pairs shown in FIG. 6(c) coincides with the unique address thereof, internally takes in the former half "Dy" of the data in pairs shown in FIG. 6(d), and the data "Dx" is output to the latter half thereof. In addition, the interface card in which the latter half "Y" of the paired address coincides with the unique address thereof outputs the data "Dy" to the former half of the paired data, and internally takes in the data "Dx" of the latter half. Thus, the data transfer is carried out.

When the control bit "C₁" shown in FIG. 6(b) is brought to an active condition, all the interface cards other than the interface card as a transmission origin take in the latter half "Dx" of the paired data. As a result, the same data are simultaneously received by the terminals connected to the interfaces referred to above. On the other hand, when the control bit "C₂" is brought to an active condition, the interface card does not transmit "Dy" of the paired data to the data bus even if "Y" of the addresses in pairs coincides with the unique address of the interface card. In addition, the interface card in which "X" of the addresses in pairs coincides with the unique address thereof does not take in "Dy" of the paired data either. That is, the data transmission is prohibited. As a result, the broadcast communication with all the interface cards can be carried out and at the same time the control of the data transmission can also be performed.

In the above embodiments, the former half of the control bit is represented as "C₁" for the broadcast control, whereas the latter half thereof is represented as "C₂" for the control of the transmission. However, as shown in FIG. 7, the timing for the broadcast control may be replaced by the timing for the transmission control. In this case too, the same effect as that obtained by the above embodiment can be obtained.

Further, the above embodiments are directed to a case in which the control bit comprising "C₁" for the broadcast control and "C₂" for the transmission control is used. Alternatively, only "C₁" for the broadcast control may be used as the control bit without using "C₂". In this case, all the interface cards may take in "Dx" of the paired data and the transmission of the data may be prohibited.

As described above, when terminals connected to respective interface cards which have the same group address receive data on a data bus during a period in which a broadcast control bit applied to an address is in a significant condition, a plurality of terminals held in an identical time-division multiplexer can receive the same data simultaneously.

Further, a plurality of terminals connected to an identical time-division multiplexer can receive the same data simultaneously even when addresses assigned to interface cards to which data are to be input and from which data are to be output, are used as one paired address and an instruction for simultaneously receiving data is given, based on a control bit, to all the interface cards to which data are to be input during the next cycle time.

## Claims

1. A transmission apparatus having a plurality of terminals (3b - 3m) and connected via a line (2) to one or more other transmission apparatus (1a, 1c) for transmitting and receiving data via the line (2) between said terminals (3b - 3m) and corresponding other terminals (3a, 3n) connected to said other apparatus (1a, 1c), the transmission apparatus comprising:
- line interfacing means (11) electrically connected to the line (2) for outputting data received from the line (2) to a data bus (14); and
- a plurality of terminal interfacing means (12b - 12m) each connected to one of said plurality of terminals (3b - 3m), each terminal having a unique address assigned thereto,
characterized in that
- controlling means (15) are provided for outputting address data to an address bus (13) and outputting broadcast control data when broadcast reception is specified; and
each terminal interfacing means (12b - 12m) is adapted:
to bring data from the data bus (14) and supply the data to the terminal (3b - 3m) during a period in which the broadcast control data is not active but the address data on the address bus (13) falls under the unique address, or
to bring data from the data bus (14) and supply the data to the terminals (3b - 3m) during a period in which the broadcast control data is active and a group address assigned in the form of predetermined bits of the address data on the address bus (13) coincides with the value of predetermined bits in the unique address of the terminal (3b - 3m).

2. The transmission apparatus according to claim 1, wherein the controlling means (15) is adapted to output address data including the group address used to specify those respective terminal interfacing means (12b - 12m) whose classifications are identical to one another.

3. A transmission apparatus having a plurality of terminals (3b - 3m) and connected via a line (2) to one or more other transmission apparatus (1a, 1c) for transmitting and receiving data via the line (2) between said terminals (3b - 3m) and corresponding other terminals (3a, 3n) connected to said other apparatus (1a, 1c), the transmission apparatus comprising:
- line interfacing means (11) electrically connected to the line (2) for outputting data received from the line (2) to a data bus (14); and
- a plurality of terminal interfacing means (12b - 12m) each connected to one of said plurality of terminals (3b - 3m), each terminal having a unique address assigned thereto,
characterized in that
- controlling means (15) are provided for outputting address data to an address bus (13) and outputting broadcast control data when broadcast reception is specified,
said controlling means (15) are adapted to output paired address data specifying two of said terminal interfacing means (12b - 12m);
each terminal interfacing means (12b - 12m) is adapted " such that
data are brought from the data bus (14) and supplied to the terminal (3b - 3m) in either one or another of paired-data output timings subsequent to paired-address output timings during a period in which the broadcast control data is not active but either one or the other of the paired address data on the address bus (13) fall under the unique address, or
data are brought from the data bus (14) and supplied to the terminal in either one of the paired-data output timings irrespective of the contents of one of the paired address data on the address bus (13) during a period in which the broadcast control data is active.

4. The transmission apparatus according to claim 3, wherein the controlling means (15) also outputs transmission control data and the terminal interfacing means (12b - 12m) specified by the other of the paired address data or the line interfacing means (11) inhibits data from being output in the other of the paired-data output timings when the transmission control data is in an active condition.

## Patentansprüche

1. Übertragungsvorrichtung, die eine Vielzahl von Terminals (3b bis 3m) aufweist und über eine Leitung (2) an eine oder mehrere andere Übertragungsvorrichtungen (la, lc) angeschlossen ist, um über die Leitung zwischen den Terminals (3b bis 3m) und entsprechenden anderen Terminals (3a, 3n), die an die anderen Vorrichtungen (1a, 1c) angeschlossen sind, Daten zu senden und zu empfangen, wobei die Übertragungsvorrichtung folgendes aufweist:
- eine Leitungs-Schnittstelle (11), die elektrisch an die Leitung (2) angeschlossen ist, um Daten, die von der Leitung (2) empfangen werden, an einen Datenbus (14) abzugeben; und
- eine Vielzahl von Terminal-Schnittstellen (12b bis 12m), die jeweils an eines von der Vielzahl von Terminals (3b bis 3m) angeschlossen sind, wobei jedes Terminal eine ihm zugeordnete spezifische Adresse besitzt,
dadurch gekennzeichnet,
daß eine Steuerung (15) vorgesehen ist, um die Adressendaten an einen Adressenbus (13) abzugeben und Rundsende-Steuerdaten abzugeben, wenn ein Rundsendeempfang vorgegeben ist;
und daß jede Terminal-Schnittstelle (12b bis 12m) dazu ausgelegt ist,
Daten von dem Datenbus (14) zu holen und die Daten dem Terminal (3b bis 3m) während einer Periode zuzuführen, in der die Rundsende-Steuerdaten nicht aktiv sind, aber die Adressendaten auf dem Adressenbus (13) unter die spezifische Adresse fallen, oder
Daten von dem Datenbus (14) zu holen und die Daten den Terminals (3b bis 3m) während einer Periode zuzuführen, in der die Rundsende-Steuerdaten aktiv sind und eine zugeordnete Gruppenadresse in der Form von vorgegebenen Bits der Adressendaten auf dem Adressenbus (13) Koinzidenz mit dem Wert der vorgegebenen Bits der spezifischen Adresse des Terminals (3b bis 3m) besitzt.

2. Übertragungsvorrichtung nach Anspruch 1,
wobei die Steuerung (15) so ausgelegt ist, daß sie Adressendaten, einschließlich der verwendeten Gruppenadresse abgibt, um die jeweiligen Terminal-Schnittstellen (12b bis 12m) zu spezifizieren, deren Klassifikationen untereinander identisch sind.

3. Übertragungsvorrichtung, die eine Vielzahl von Terminals (3b bis 3m) aufweist und über eine Leitung (2) an eine oder mehrere andere Übertragungsvorrichtungen (1a, 1c) angeschlossen ist, um über die Leitung (2) zwischen den Terminals (3b bis 3m) und entsprechenden anderen Terminals (3a, 3n), welche an die anderen Übertragungsvorrichtungen (1a, 1c) angeschlossen sind, Daten zu senden und zu empfangen, wobei die Übertragungsvorrichtung folgendes aufweist:
- eine Leitungs-Schnittstelle (11), die elektrisch an die Leitung (2) angeschlossen ist, um Daten, die von der Leitung (2) empfangen werden, an einen Datenbus (14) abzugeben; und
- eine Vielzahl von Terminal-Schnittstellen (12b bis 12m), die jeweils an eines von der Vielzahl von Terminals (3b bis 3m) angeschlossen sind, wobei jedes Terminal eine ihm zugeordnete spezifische Adresse besitzt,
dadurch gekennzeichnet,
daß eine Steuerung (15) vorgesehen ist, um Adressendaten an einen Adressenbus (13) abzugeben und Rundsende-Steuerdaten abzugeben, wenn ein Rundsendeempfang vorgegeben ist, daß die Steuerung (15) so ausgelegt ist, daß sie paarweise Adressendaten abgibt, welche zwei von den Terminal-Schnittstellen (12b bis 12m) spezifizieren;
daß jede Terminal-Schnittstelle (12b bis 12m) so ausgelegt ist, daß
Daten von dem Datenbus (14) geholt und dem Terminal (3b bis 3m) entweder in der einen oder der anderen von Ausgabezeiten von paarweisen Daten zugeführt werden, und zwar im Anschluß an Ausgabezeiten von paarweisen Daten während einer Periode, in der die Rundsende-Steuerdaten nicht aktiv sind, aber die einen oder die anderen der paarweisen Adressendaten auf dem Adressenbus (13) unter die spezifische Adresse fallen, oder
daß Daten von dem Adressenbus (14) geholt und dem Terminal entweder in der einen oder der anderen von Ausgabezeiten von paarweisen Daten zugeführt werden, und zwar unabhängig von dem Inhalt von den einen der paarweisen Adressendaten auf dem Adressenbus (13), während einer Periode, in der die Rundsende-Steuerdaten aktiv sind.

4. Übertragungsvorrichtung nach Anspruch 3,
wobei die Steuerung (15) ferner Übertragungssteuerdaten abgibt und die Terminal-Schnittstelle (12b bis 12m), die von den anderen der paarweisen Adressendaten spezifiziert ist, oder die Leitungs-Schnittstelle (11) die Abgabe von Daten in der anderen der Ausgabezeiten von paarweisen Daten sperrt, wenn die Übertragungs-Steuerdaten in einem aktiven Zustand sind.

## Revendications

1. Dispositif de transmission ayant un certain nombre de terminaux (3b-3m) et relié par l'intermédiaire d'une ligne (2) à un ou plusieurs autres dispositifs de transmission (la, lc) pour transmettre et recevoir des données par l'intermédiaire de la ligne (2) entre lesdits terminaux (3b-3m) et d'autres terminaux correspondants (3a-3m) reliées auxdits autres dispositifs (1a, 1C), le dispositif de transmission comprenant :
- un moyen d'interfaçage de ligne (11) relié électriquement à la ligne (2) pour produire des données reçues par la ligne (2) à un bus de données (14) ; et
- un certain nombre de moyens d'interfaçage de terminaux (12b-12m) chacun relié à l'une de ladite pluralité de terminaux (3b-3m), chaque terminal ayant une adresse unique attribuée à celle-ci,
caractérisé en ce que
- des moyens de commande (15) sont prévus pour produire des données d'adresses à un bus d'adresses (13) et produire des données de commande de diffusion lorsqu'une réception d'informations diffusées est spécifiée ; et
chaque moyen d'interfaçage de terminaux (12b-12m) est adapté pour :
amener des données du bus de données (14) et fournir les données au terminal (3b-3m) pendant une période dans laquelle les données de commande de diffusion ne sont pas actives mais les données d'adresses sur le bus d'adresses (13) tombent sous l'adresse unique, ou
amener des données du bus de données (14) et fournir les données aux terminaux (3b-3m) pendant une période dans laquelle les données de commande de diffusion sont actives et un groupe d'adresses attribué sous la forme de bits prédéterminés des données d'adresses sur le bus d'adresses (13) coïncide avec la valeur de bits prédéterminés dans l'adresse unique du terminal (3b-3m).

2. Dispositif de transmission selon la revendication 1, dans lequel le moyen de commande (15) est adapté pour produire des données d'adresses comprenant l'adresse du groupe utilisée pour spécifier les moyens d'interfaçage de terminaux respectifs (12b-12m) dont les classifications sont identiques les uns aux autres.

3. Dispositif de transmission ayant un certain nombre de terminaux (3b-3m) et relié par l'intermédiaire d'une ligne (2) à un ou plusieurs autres dispositifs de transmission (la, lc) pour transmettre et recevoir des données par l'intermédiaire de la ligne (2) entre lesdits terminaux (3b-3m) et d'autres terminaux correspondants (3a, 3n) reliées auxdits autres dispositifs (1a, 1c), le dispositif de transmission comprenant :
- un moyen d'interfaçage de ligne (11) relié électriquement à la ligne (2) pour produire des données reçues par la ligne (2) à un bus de données (14) ; et
- un certain nombre de moyens d'interfaçage de terminaux (12b-12m) chacun relié à l'une de ladite pluralité de terminaux (3b-3m), chaque terminal ayant une adresse unique attribuée à celle-ci,
caractérisé en ce que
- des moyens de contrôle (15) sont prévus pour produire des données d'adresses à un bus d'adresses (13) et produire des données de commande de diffusion lorsqu'une réception d'informations diffusées est spécifiée,
lesdits moyens de commande (15) sont adaptés pour produire les données d'adresses par paire spécifiant deux desdits moyens d'interfaçage de terminaux (12b-12m) ;
chaque moyen d'interfaçage de terminaux (12b-12m) est adapté de sorte que
des données sont amenées par le bus de données (14) et fournies au terminal (3b-3m) dans l'une ou une autre des temporisations de sortie de données par paire subséquentes à des temporisations de sortie d'adresses par paire pendant une période dans laquelle les données de commande de diffusion ne sont pas actives mais l'une ou l'autre des données d'adresses par paire sur le bus d'adresse (13) tombe sous l'adresse unique, ou
les données sont amenées par le bus de données (14) et fournies au terminal dans l'une ou l'autre des temporisations de sortie de données par paire indépendamment des contenus de l'une des données d'adresses par paire sur le bus d'adresses (13) pendant une période dans laquelle les données de commande de diffusion sont actives.

4. Dispositif de transmission selon la revendication 3, dans lequel les moyens de commande (15) produisent également des données de commande de transmission et le moyen d'interfaçage de terminaux (12b-12m) spécifié par l'autre des données d'adresses par paire ou le moyen d'interfaçage de ligne (11) empêche des données d'être produites dans l'autre des temporisations de sortie des données par paire lorsque les données de commande de transmission sont dans une condition active.
